# EUROPEAN PATENT APPLICATION

(11) **EP 1 905 350 A1**
(43) Date of publication of application: **02.04.2008**
(21) Application number: 06767920.9
(22) Date of filing: 06.07.2006
(51) Int. Cl.: A61B 5/00, G01J 3/46, G06T 1/00, H04N 1/46, H04N 1/60, H04N 9/04, H04N 9/73

(54) **IMAGE PROCESSOR, IMAGE PROCESSING SYSTEM AND IMAGE PROCESSING PROGRAM**

(30) Priority: 19.07.2005 JP 2005208484
(71) Applicant: KONICA MINOLTA HOLDINGS, INC., Tokyo 100-0005 (JP)
(72) Inventor: KITOH, Shin-ichiroh, Konica Minolta Tech Cen. Inc., Tokyo 191-8511 (JP); YOSHIDA, Yukio, Konica Minolta Tech. Center Inc., Tokyo 191-8511 (JP); HUNG, Po-Chieh, Konica Minolta Tech. Center Inc., Tokyo 191-8511 (JP)
(74) Representative: Alton, Andrew
(86) International application number: PCT/JP2006/313461
(87) International publication number: WO 2007/010749

(57) **Abstract**

An image processor performing image processing for reproducing the skin color of an object easily on a screen without being affected by variation in surrounding environment. The image processor (3) comprises a living body color information acquiring section (9) for acquiring color data in the white region of a living body from image data obtained by photographing the living body as an object, and a data processing section (10) performing white balance adjustment of the photographed image data based on the color data acquired at the living body color information acquiring section.

## Description

### TECHNICAL FIELD

The present invention relates to an image processing apparatus, image processing system and image processing program, particular to an image processing apparatus, image processing system and image processing program which are intended to process the images of a human body and others photographed for medical treatment and diagnosis.

### TECHNICAL BACKGROUND

One of the techniques known in the conventional art as an image processing system intended to process the image data of a human body and others for the purpose of diagnosis for medical treatment and beauty culture is an image processing system that performs corrections to ensure accurate reproduction of the color of the subject skin on the screen, without being affected by a change in the surrounding environment of illumination and others.

For example, the Patent Document 1 discloses a medical treatment diagnostic system provided with a color correction device for correcting colors using the reference white plate as a color reference, wherein a reference white plate is attached on the breast of a subject to perform photographic operations.

The Patent Document 2 discloses a remote-controlled diagnostic system for medical treatment provided with an automatic display color adjusting apparatus wherein a reference color sample is placed close to a patient to take a photograph, and, when the color misregistration between the reference color sample image and reference color sample member has exceeded a criterion, image processing is conducted to correct color misregistration, whereby the aforementioned automatic display color adjusting apparatus ensures accurate reproduction of the color of the patient skin and others on the screen.

The Patent Document 3 discloses an image processing system for medical treatment wherein, when determining the color characteristics of each image input/output apparatus, a chart containing a great number of colors close to those of the lesion or skin of the subject is used to ensure a higher-precision reproduction of the tone of color of the subject.

The Patent Document 4 introduces an image acquisition calibration technique wherein the colors of the subject image data are adjusted to become close to the colors stored as calibration information, thereby displaying an accurate image of the state of the portion external to a human body under varying conditions of light.

Patent Document 1: Japanese Unexamined Patent Application Publication No. 10-165375

Patent Document 2: Japanese Unexamined Patent Application Publication No. 11-19050

Patent Document 3: Japanese Unexamined Patent Application Publication No. 2001-258044

Patent Document 4: Japanese Unexamined Patent Application Publication No. 2003-220036

### DISCLOSURE OF THE INVENTION

### PROBLEMS TO BE SOLVED BY THE INVENTION

In any of the inventions described in Patent Documents 1 through 4, such a member as a reference white plate or chart must be separately arranged to achieve accurate reproduction of the colors of the subject skin on a screen. When using a chart containing a great number of colors close to those of the lesion or skin of the subject, a several types of charts must be prepared for each subject. This arrangement involves the problem of complicated manufacturing steps of the image processing system and increased production costs.

The object of the present invention is to solve the aforementioned problems and to provide an image processing apparatus, image processing system and image processing program capable of simple image processing by accurate reproduction and analysis of the colors of the subject skin and others on the screen, without being affected by a change in the surrounding environment.

### MEANS FOR SOLVING THE PROBLEMS

To solve these problems, the image processing apparatus of the present invention includes a living body color information acquisition section for acquiring color data in a white area of a living body from image data obtained by photographing the living body as a subject; and a data processing section for adjusting white balance of the image data obtained by photographing, based on the color data acquired by said living body color information acquisition section.

The image processing system of the present invention includes an image processing apparatus of the present invention; and an image inputting apparatus for photographing a living body as a subject, said image inputting apparatus being connected communicably with said image processing apparatus over a network.

The image processing program product of the present invention causes a computer to execute a living body color information acquisition step for acquiring color data in a white area of a living body from image data obtained by photographing the living body as a subject; and a white balance adjusting step for adjusting white balance of the image data obtained by photographing, based on the acquired color data.

### EFFECTS OF THE INVENTION

The present invention ensures easy acquisition of the color data for white balance adjustment by using the image data of the white area of a living body. This arrangement eliminates the need of separately installing such a member as a reference white plate or chart.

### BRIEF DESCRIPTION OF THE DRAWINGS

Fig. 1 is a block diagram representing the functional structure of the image processing system related to an embodiment of the present invention;
Fig. 2 is a diagram representing an example of extracting the area of teeth in the living body color information acquisition section related to an embodiment of the present invention;
Fig. 3 is a chart representing an image luminance of the image data related to an embodiment of the present invention;
Fig. 4 is a chart representing an image value ratio of the image data related to an embodiment of the present invention;
Fig. 5 is a chart representing the color data of the image data related to an embodiment of the present invention;
Fig. 6 is a chart representing the color data of the image data related to an embodiment of the present invention;
Fig. 7 is a flow chart showing initial registration processing related to an embodiment of the present invention; and
Fig. 8 is a flow chart showing the white balance adjustment processing related to an embodiment of the present invention.

### DESCRIPTION OF REFERENCE SYMBOLS

- 1.: Image processing system
- 2.: Image inputting apparatus
- 3.: Image processing apparatus
- 4.: External apparatus
- 5.: Control section
- 6.: Memory section
- 7.: I/O section
- 8.: User interface section
- 9.: Living body color information acquisition section
- 10.: Data processing section
- 11.: Data management and storing section
- 12.: External communication section
- 13.: Image display section
- 14.: Illumination apparatus

### BEST MODE FOR PRACTIDING THE INVENTION

The following describes the embodiments of the present invention with reference to drawings:

### (System configuration)

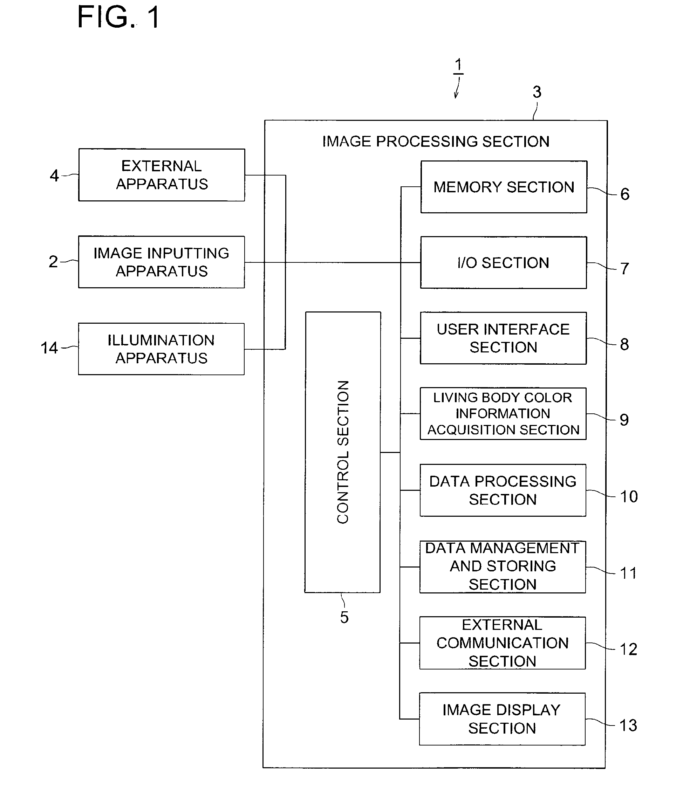

Fig. 1 is a block diagram representing the functional structure of the image processing system related to an embodiment of the present invention. The image processing system 1 as an embodiment of the present invention is applicable, for example, to daily health checkup for examining the complexion at home every day. In one embodiment for this purpose, the image processing system is installed in a lavatory, and illumination is applied to the subject, whereby a subject is photographed from the back of a lavatory mirror made up of a half-mirror. The obtained image is then corrected in conformity to the characteristics (including the characteristics of the illumination light) of the system, whereby high-precision measuring of the complexion is achieved. This technique is also applicable to diagnosis of illness and beauty treatment.

As shown in Fig. 1, the image processing system 1 includes an image inputting apparatus 2 for acquiring the image of a subject, an illumination apparatus 14 for applying illumination light to the subject, an image processing apparatus 3 for processing the image of the image data having been acquired; and a one or more external apparatuses 4, wherein these devices are connected communicably with one another over the network.

The external apparatus 4 is exemplified by a personal computer, and is preferably installed when some consulting or diagnostic service is required. For example, to get data on health by the image inputting apparatus 2 related to the present embodiment, the external apparatus 4 may be installed in a hospital or a health management center. To get the data on beauty treatment, the external apparatus 4 may be installed in a cosmetic parlor or hospital. Further, the external apparatus 4 can be the Internet for providing consulting information or the mobile terminal of the consultant, doctor and salesclerk.

The image processing system 1 is made up of one or more cameras capable of capturing a still picture or a moving image by means of an image pickup tube such as a CCD or CMOS. It is possible to use a camera module attached to a digital camera, video camera and other mobile phones, for example.

The illumination apparatus 14 is formed of a light source such as a fluorescent lamp that emits illumination light of a neutral white color or white color characterized by a high degree of color reproducibility. A plurality of light sources can be installed for selective use. In this case, the light source used in the initial phase is preset at the time of shipment.

The image processing apparatus 3 is provided with a control section 5, memory section 6, I/O section 7, user interface section 8, living body color information acquisition section 9, data processing section 10, data management and storing section 11, external communication section 12 and image display section 13.

The control section 5 drives and controls various components of the image processing apparatus 3. Since the image processing apparatus 3 as an embodiment of the present invention handles moving images as well, the control section 5 is preferably formed of chips characterized by the highest possible operation and control.

The memory section 6 is made up of a ROM for storing the image processing program of the present invention and a RAM for storing the data required in the data processing section 10 when it has been transferred from the data management and storing section 11.

The I/O section 7 is used to input the image data through the image inputting apparatus 2, and to output various forms of data from the image processing apparatus 3 to the external apparatus 4. Further, it can be connected with the equipment handling a portable device such as a CF card, SD card and USB memory card, so that image data is inputted from these devices.

The user interface section 8 includes an input section for the user to input various forms of data, and a display section for displaying the status of the image processing apparatus 3 or various forms of input requests for the sake of the user. For example, it can be constructed as a touch panel integrally built with the image display section 13. Further, a speaker and microphone can be provided to permit communication by sound, or an imaging apparatus can be installed so as to permit communications by action or gesture (including an advanced communication device such as a sign language device).

The user interface section 8 can be provided with a device allows the user to specify the tooth area of the captured image by enclosing it with a rectangular pointer and others, and a device which specifies the tooth area by displaying a rectangle of a specified size with the specified position as a center, when the user has specified the area close to the teeth.

The living body color information acquisition section 9 is designed to acquire the color data in the "white area" of the subject as the reference data for image processing from the image data inputted through the image inputting apparatus 2, I/O section 7 and data management and storing section 11. In the present embodiment, the color data that can be calculated uniquely from the average image data of the tooth area of the subject under predetermined illumination conditions is acquired as the "illumination parameter".
Since teeth are normally white, this is suitable as the color data for adjusting the white balance.

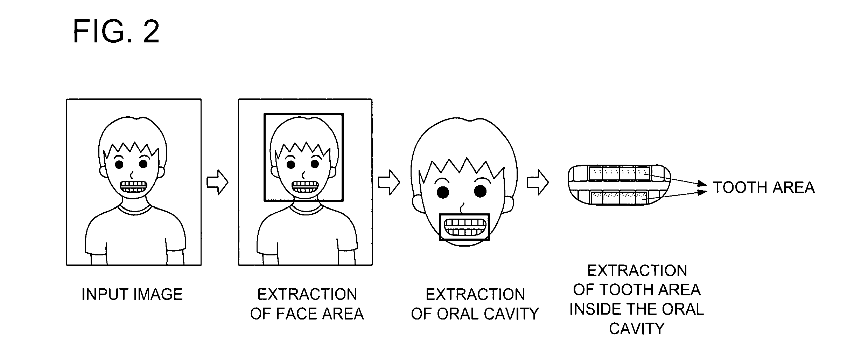

To be more specific, the living body color information acquisition section 9 of the present embodiment extracts the image data of the face area using the image data captured with the focus placed on the human face is photographed as the major item, as shown in Fig. 2, and extracts the image data of the oral cavity. After that, the living body color information acquisition section 9 extracts the image data of the tooth area inside the oral cavity.

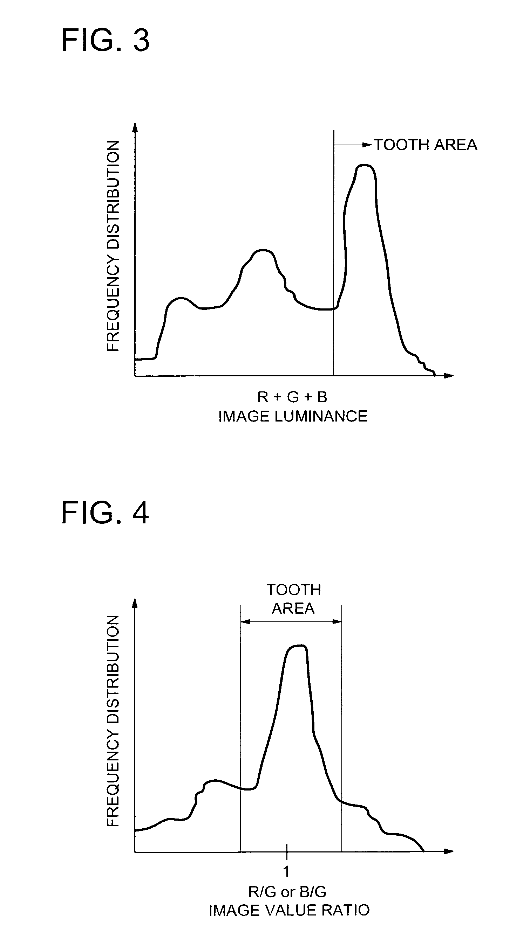

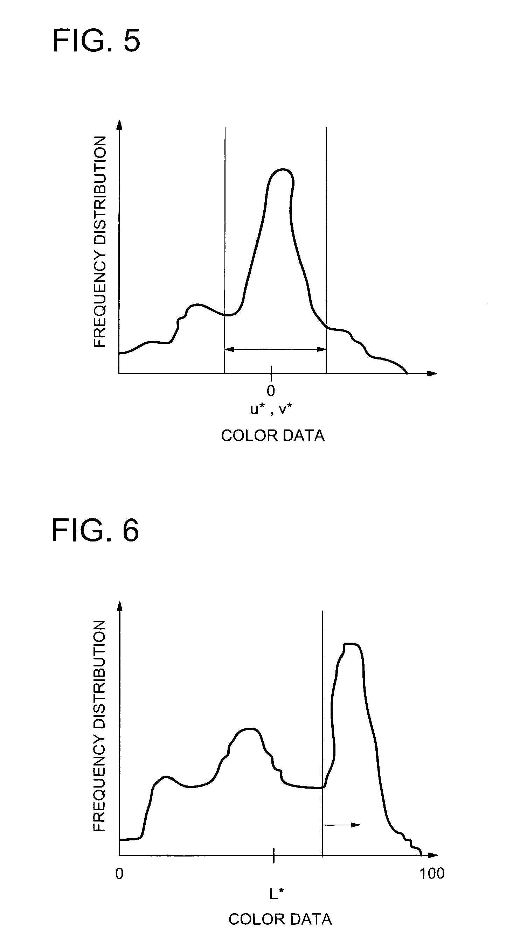

The conventionally known technique can be used to extract each area in the photographed image. For example, in extracting the tooth area inside the oral cavity, it is possible to extract the area of high luminance as a tooth area from the image data of the oral cavity, as shown in Fig. 3. Further, to extract the tooth area without being affected by the shadow, it is possible to extract the area inside the threshold value, wherein the R/G or B/G is used as an index and a value close to "1" is used as a threshold value, as shown in Fig. 4. Further, it is also possible to extract the tooth area from the distribution of the color data such as the tristimulus value data (XYZ) calculated from the image data of the oral cavity or the uniform color value data (L*u*v*). For example, a step is taken to extract the area inside the threshold value wherein u* and v* are used as indexes, and the value close to "0" is used as the threshold value, as shown in Fig. 5, and to extract the area having a value equal to or greater than a predetermined threshold value wherein L* is used as an index, as shown in Fig. 6. Then the area meeting both the area inside a predetermined threshold value of Fig. 5 and the area equal to or greater than a predetermined threshold value of Fig. 6 can be used as the tooth area. It should be noted that the threshold value can be inputted through the user interface section 8 or can be stored in the data management and storing section 11. The image data can be converted to the color data by using other conventionally known techniques. It is possible to use the method disclosed in the Patent Document 1, Patent Document 3 or Japanese Unexamined Patent Application Publication No. 2004-148944.

The illumination parameter can be calculated by the conventionally known method. For example, assume that the image inputting apparatus 2 has three third channels (RGB) and the average image data of the tooth area is (RₜGₜBₜ). Then it is possible to consider the method of calculating the tristimulus values (XₜYₜZₜ) by the transformation formula (encoding transformation) defined by the sRGB Standard (IEC 61966-2-1) wherein the color space is assumed as the sRGB, or the method of converting into the tristimulus values or other color data by taking into account the system matrix and processing step in the image processing system.

Thus, as described above, the color data in the "white area" under predetermined illumination light can be used as the reference data for image processing, by extracting the image data of the tooth area in the living body color information acquisition section 9 and acquiring the illumination parameter, without having to install such a member as a reference white plate or chart close to the subject.

Giving consideration to chronological change of the illumination light, it is also possible to make such arrangements as to set the term of validity of the illumination parameter to be stored in the data management and storing section 11, thereby getting the illumination parameter for each term of validity.

To get the color data in the "white area" of the subject, there is no specification that defines the illumination light as a reference or the color of the teeth. For example, the reference to be used can be the illumination condition under the fluorescent lamp of a lavatory or living room wherein the image processing system 1 is considered to be used most frequently, or the illumination condition conforming to the international standard (D65, D50, etc.). Further, it is also possible to make such arrangements that the data suitably used as the reference is selected from the image data or color data of the past through the user interface section 8.

Going back to Fig. 1, the data processing section 10 applies image processing to the image data of each area of the subject photographed by the image inputting apparatus 2 and the image data inputted from the I/O section 7, based on the illumination parameter of the image data in the tooth area acquired by the living body color information acquisition section 9, namely, the color data of the "white area" under predetermined illumination. In the present embodiment, white balance adjustment is performed as image processing. The white balance adjustment of higher accuracy can be achieved by easy and accurate grasping of the color component of the illumination light reflected on the image data, wherein the color data of the "white area" is used as a reference.

To be more specific, the data processing section 10 calculates the correction parameter, based on the illumination parameter acquired by the living body color information acquisition section 9 and applies the processing of computation to the inputted image data, using the correction parameter, whereby white balance adjustment is performed. It should be noted that the calculated correction parameter and the image data subjected to image processing are outputted to the I/O section 7 or data management and storing section 11.

The "correction parameter" in the sense in which it is used here refers to the parameter obtained by predetermined computation, based on the illumination parameter and reference data. The reference data is, for example, the illumination parameter obtained from the image data obtained by photographing the face at the time of first registering the personal information into this image system. The correction parameter, for example, can be obtained by taking the ratio (X_{b}Yₜ/XₜY_{b}, 1, Z_{b}Yₜ/ZₜY_{b}) between the tristimulus values (X_{b}Y_{b}Z_{b}) of the color data as a reference and the illumination parameter. Further, it is also possible to calculate other correction parameters according to the image correction method.

The conventionally known method can be employed to adjust the white balance using the correction parameter. For example, the color space of the image data having been obtained is assumed as a sRGB. For example, the image data (RpGpBp) is transformed into the tristimulus values (XpYpZp) according to the transformation formula (encoding transformation) defined by the sRGB Standard (IEC 61966-2-1), and these values are multiplied by a predetermined correction parameter, thereby getting the image data (X_{P}*X_{b}Yₜ/XₜY_{b}, Yₚ, Zₚ*Z_{b}Yₜ/ZₜY_{b}). After that, this image data can be transformed again into the sRGB. It should be noted that color misregistration may occur to the portion of higher saturation. It is possible to use another image processing method capable of eliminating the possibility.

The white balance can be adjusted by calculating the correction parameter every time the image data is inputted. It can also be adjusted using the correction parameter of the past stored in the data management and storing section 11. In this case, it is possible to select and apply the most updated correction apparatus stored in the data management and storing section 11.

In principle, the correction parameter is calculated every time an image is inputted, and image processing is performed. When the captured image does not contain the image of a tooth or the color data of the tooth area cannot be acquired by the living body color information acquisition section 9, the correction parameter stored in the data management and storing section 11 can be employed.

It is possible to use as a basis the term of validity of the illumination parameter and the correction parameter stored in the image processing system 1. Namely, within the term of validity, the correction parameter stored in the data management and storing section 11 is used to perform image processing. This arrangement simplifies image processing and reduces the processing time.

According to the most preferable method, the illumination parameter acquired by the living body color information acquisition section 9 is compared with the illumination parameter at the time of calculating the previously used correction parameter. If this difference lies within a predetermined threshold value, the image is processed using the previously used correction parameter. This arrangement eliminates the need of the correction parameter to be calculated by the data processing section every time, with the result that image processing efficiency is enhanced.

The data management and storing section 11 manages and stores the image data inputted from the outside, the image data having been processed by the image processing apparatus 3 or the temporary data halfway through image processing.

To be more specific, the data management and storing section 11 stores the image data inputted from the outside, the face data extracted from the image data inputted from the outside, the image data of the oral cavity extracted from the face data, and the image data of the tooth area extracted from the image data of the oral cavity.

The data management and storing section 11 manages and stores the illumination parameter acquired by the living body color information acquisition section 9, the correction parameter calculated by the data processing section 10, and the image data subsequent to image processing in chronological order.

Further, the data management and storing section 11 manages and stores the threshold value of the difference in the illumination parameters, the setting of the term of validity of the correction parameter, the threshold value of the tooth area, the settings of other parameters required for image processing, various forms of illumination light, reference color data and others. This arrangement allows an instruction signal to be outputted to the control section 5 when the difference in the illumination parameter lies within a predetermined threshold value. It also allows the instruction signal to be outputted to the control section 5, by automatic determination of the time of updating the correction parameter, whereby the correction parameter stored in the data management and storing section 11 can be updated.

The data management and storing section 11 stores the information such as the image data of the face area, image data of the tooth area, illumination parameter or correction parameter in the form correlated with the personal information of the subject or user of the apparatus. This arrangement avoids the confusion that may occur when one and the same apparatus is used by a plurality of persons. For example, using the image data of the face area stored in the data management and storing section 11, a step of personal authentication is applied to the image data of the subject having been photographed, whereby the illumination parameter of the authenticated person is extracted.

The external communication section 12 is so designed as to communicate with the external apparatus 4 by the wired or wireless communication device. Since the image processing apparatus 3 of the present embodiment handles the image information, the preferred mode of communications should be the one that allows the transmission at the highest possible rate.

The image display section 13 is made up of a CRT, liquid crystal, organic EL, plasma or projection type display. It displays the image data being processed in the data processing section 10, or the image data subsequent to image processing stored in the data management and storing section 11. Further, the image display section 13 also displays the information on the status of the components of the image processing system 1 and the information provided by the external apparatus 4. It is also possible to design a structure of sharing the function with the user interface section 8, for example, by using the touch panel.

### (Image processing flow)

The following describes the image processing method of the present invention using the image processing system 1.

### <Initial registration processing>

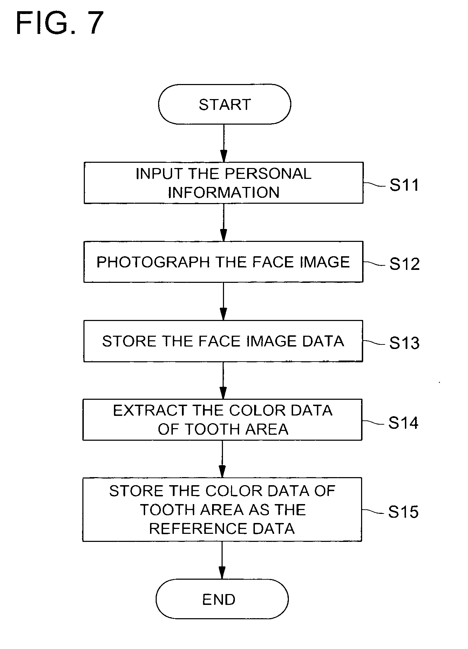

Initial registration processing is the step of registering the user who uses the apparatus for the first time. Fig. 7 shows the flow of this processing. This processing, for example, is initiated by the user selecting and inputting the initial registration through the user interface section 8.

In the first place, the control section 5 allows the input request for the personal information of the user (name, the date of birth, sex), the mode of living and others to be displayed on the user interface section 8. In response to this display, personal information or the like is inputted by the user (Step S11).

The control section 5 uses the image inputting apparatus 2 to take a photograph. In this case, for example, the message "Show your teeth." is displayed on the user interface section 8. This provides the face image data including the tooth area image of the user. Further, at the time of photographing, the control section 5 controls the illumination apparatus 14 so that the user is exposed to the illumination light (Step S12).

Then the control section 5 correlates the acquired face image data with the personal information and stores the result in the data management and storing section 11 (Step S13) .

The control section 5 allows the living body color information acquisition section 9 to extract the color data of the tooth area from the face image data stored in the data management and storing section 11. To put it more specifically, the image of the tooth area is assumed as the sRGB image and allows the tristimulus value data to be extracted from the image data of the tooth area, using the sRGB Standard (IEC 61966-2-1) (Step S14).

The control section 5 uses the color data of the extracted tooth area as reference data, correlates it with the personal information, and stores it in the data management and storing section 11 (Step S15).

In the above description, the image of the tooth area is acquired concurrently at the time of photographing the face image. The image of the tooth area can be photographed, separately from photographing of the face image.

Except for the user inputting the selection of initial registration, initial registration processing can be performed as follows: In the first place, the face image is photographed; then initial registration processing is performed if the face image matching with the captured face image is stored in the data management and storing section 11.

It is preferred that the initial registration should be performed not only at the time of initial use, but also on a periodic basis (e.g., every year), so that the registration data such as the reference data in the tooth area is updated. For example, a message "Update personal data." is displayed on the user interface section 8. In response to this message, the user acknowledges and gives an instruction of updating. Then initial registration is processed.

In the above description, the tristimulus value data as a reference data of the tooth area is the data extracted for each person. However, it is also possible to use the tristimulus value data of a tooth average for humans. The tristimulus value data of a tooth average for humans can be calculated using the publicly disclosed database of the spectral reflectivity of the tooth. The spectral characteristic data of the illumination light used in the calculation of this tristimulus value data is appropriately selected out of the spectral characteristic data of the D65 light source, the D50 light source, and the light source of higher color rendering property. Since the whiteness of the tooth undergoes a change with the lapse of time. It is preferred to prepare the tristimulus value data for each age bracket of 10s or 20s.

### <White balance adjustment>

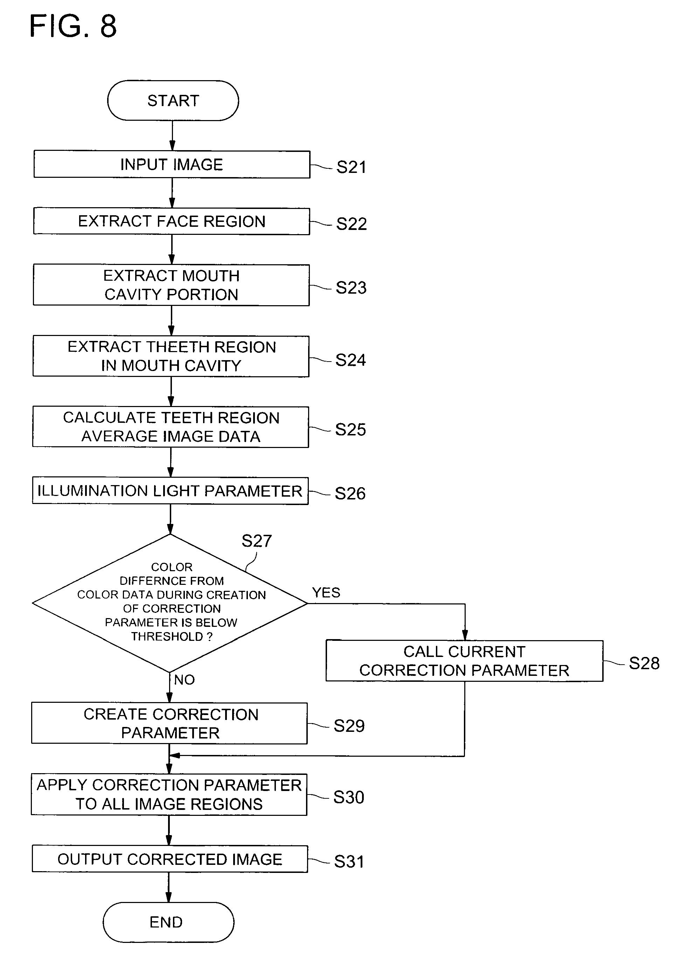

Fig. 8 is a flow chart showing the white balance adjustment processing related to an embodiment of the present invention. A particular user is selected out of the user candidates registered through the user interface section 8.

When the user has started use of the image processing system 1, the image data captured with the focus placed on the human face under predetermined light conditions is inputted into the living body color information acquisition section 9 through the I/O section 7 or data management and storing section 11 (Step S21).

Then, the living body color information acquisition section 9 picks up the image data of the face area from the image data captured with the focus placed on the human face (Step S22), and extracts the image data of the oral cavity (Step S23). After that, the image data of the tooth area inside the oral cavity is extracted (Step S24). The image data of the face area and the image data of the tooth area are outputted to the data management and storing section 11 and are stored after being correlated with personal information.

After having calculated the average image data of the tooth area (RₜGₜBₜ), the living body color information acquisition section 9 (Step S25) calculates the tristimulus values (XₜYₜZₜ) according the transformation formula defined by the sRGB Standard, whereby the image data is converted into the color data. Then the color data that can be uniquely calculated from the average image data of the tooth area under the predetermined illumination conditions is outputted to the data management and storing section 11 as an illumination parameter (Step S26). The illumination parameter outputted to the data management and storing section 11 is stored after being correlated with the personal information.

The data processing section 10 compares the illumination parameter calculated by the living body color information acquisition section 9, with the illumination parameter at the time of calculating the correction parameter used previously, and determines if the color difference does not exceed the predetermined threshold value (Step S27).

If the color difference does not exceed the predetermined threshold value, the previously used correction parameter is used to execute image processing (Step S28).

If the color different exceeds the threshold value, the correction parameter is calculated based on the illumination parameter newly acquired by the living body color information acquisition section 9 and the reference data registered in initial registration (Step S29). It should be noted that the calculated correction parameter is outputted to the I/O section 7 or data management and storing section 11 and is stored after being correlated with the personal information.

Steps S27 and S28 can be omitted. When the captured image does not include any tooth image, the color image of the tooth area cannot be obtained, or the illumination parameter and correction parameter are within the term of validity, the correction parameters stored in the data management and storing section 11 can be utilized.

The data processing section 10 applies the processing of calculation using the correction parameter to the entire image data having been inputted, whereby the white balance of the image data is adjusted (Step S30). The image data having been subjected to image processing is outputted to the I/O section 7 or data management and storing section 11, and is stored after being correlated with the personal information

### (Step S31).

As described above, according to the image processing method, image processing apparatus 3 and image processing system 1, extraction of the image data of the tooth area as the white area of a living body makes it possible to obtain the color data wherein the color components of the illumination light is directly reflected, namely, the illumination parameter. This procedure facilitates separation between the color components of a subject and those of the illumination, and ensures accurate adjustment of the white balance, with consideration given to the influence of illumination light upon image data.

Further, the aforementioned image processing method, image processing apparatus 3 and image processing system 1 allow image processing to be executed by reference to the illumination parameters or correction parameters stored in the data management and storing section 11 in chronological order. To be more specific, if there is no change in the illumination parameter, the previously used correction parameter can be used directly. The data processing section 10 is not required to calculate the correction parameter every time, with the result that image processing efficiency is enhanced.

In the present embodiment, the image processing system 1 is provided with the image inputting apparatus 2 and image processing apparatus 3. It is also possible to make such arrangements that the image inputting apparatus 2 includes the function of the image processing apparatus 3.

It is also possible to make such arrangements that a surrounding environment information acquisition section is installed to get information on the surrounding environment wherein the image processing system 1 is installed, and this surrounding environment information acquisition section directly measures the color data of the tooth are of the subject. In this case, the color data measured by the surrounding environment information acquisition sectionnot the color data extracted from the image data obtained by the image inputting apparatus 2 -- is used for image processing. In this case, it is preferred to design a structure wherein the image inputting apparatus 2 and image processing apparatus 3 are integrated with each other.

In the present embodiment, the tooth area is extracted using a human as the subject. The present invention is also applicable to the cases wherein an animal such as a dog, cat, horse or rabbit is used as a subject. In this case, the image data of the tooth area of an animal or the image data of the white area of the body or leg can be extract to perform image processing, similarly to the case of the present embodiment.

Further, the present embodiment has exhibited a method of image processing in response to a change in the illumination environment. It is also possible to arrange such a configuration that, when the human being or human face is used as a major subject, the time interval for updating the correction parameter is determined in response to the rate of change in the shape or color of the subject in the background of other than the major subject.

As described above, the image processing method, image processing apparatus and image processing system of the present invention provide easy image processing wherein the image data is not affected by a change in the surrounding environment, without having to install such a separate member as a reference white plate or chart.

Further, image processing can be executed by appropriate reference to the illumination parameters or correction parameters stored in the chronological order, with the result that image processing efficiency is enhanced.

## Claims

1. An image processing apparatus comprising:
a living body color information acquisition section for acquiring color data in a white area of a living body from image data obtained by photographing the living body as a subject; and
a data processing section for adjusting white balance of the image data obtained by photographing, based on the color data acquired by said living body color information acquisition section.

2. The image processing apparatus described in Claim 1 wherein the white area of the living body is a tooth area.

3. The image processing apparatus described in Claim 1 or 2 further comprising a data management and storing section for storing reference data in the white area of said living body, wherein said data processing section calculates a correction parameter from the color data and the reference data, and the white balance of the image data obtained by photographing is adjusted based on the correction parameter.

4. The image processing apparatus described in Claim 3 wherein said data management and storing section stores the color data and the correction parameter in chronological order.

5. The image processing apparatus described in Claim 4 wherein said data processing section compares the color data with color data stored in said data management and storing section as data corresponding to the previously used correction parameter; and, if a difference obtained by the comparison does not exceed a predetermined threshold value, white balance is adjusted by the previously used correction parameter.

6. An image processing system comprising:
an image processing apparatus described in any one of Claims 1 through 5; and
an image inputting apparatus for photographing a living body as a subject, said image inputting apparatus being connected communicably with said image processing apparatus over a network.

7. An image processing program product for causing a computer to execute:
a living body color information acquisition step for acquiring color data in a white area of a living body from image data obtained by photographing the living body as a subject; and
a white balance adjusting step for adjusting white balance of the image data obtained by photographing, based on the acquired color data.

8. The image processing program product described in Claim 7 wherein the white area of the living body is a tooth area.

9. The image processing program product described in Claim 7 or 8 wherein the program product if for further causing the computer to execute a reference data storing step for storing reference data in the white area of the living body; and in the white balance adjusting step, a correction parameter is calculated from the color data and the reference data, and the white balance of the image data obtained by photographing is adjusted based on the correction parameter.

10. The image processing program product described in Claim 9 wherein the program product is for further causing the computer to execute a data storing step for storing the color data and correction parameter in chronological order.

11. The image processing program described in Claim 10 wherein, in the white balance adjusting step, the color data is compared with the color data stored in said the data storing step as data corresponding to a previously used correction parameter; and, if the difference obtained by the comparison does not exceed a predetermined threshold value, white balance is adjusted by the previously used correction parameter.
